# EUROPEAN PATENT SPECIFICATION

(11) **EP 3 153 360 B1**
(45) Date of publication and mention of the grant of the patent: **29.08.2018**
(21) Application number: 15188989.6
(22) Date of filing: 08.10.2015
(51) Int. Cl.: B60S 1/48, B60W 10/30

(54) **INTELLIGENT CONTROL OF A WIPER NOZZLE OF A CAR**
INTELLIGENTE STEUERUNG EINER SCHEIBENWISCHERDÜSE EINES AUTOS
COMMANDE INTELLIGENTE D'UNE BUSE D'ESSUIE-GLACE D'UNE AUTOMOBILE

(43) Date of publication of application: 12.04.2017
(73) Proprietor: Panasonic Automotive & Industrial Systems Europe GmbH, 63225 Langen (DE)
(72) Inventor: HAGE, Marwan, 63225 Langen (DE)
(74) Representative: Grünecker Patent- und Rechtsanwälte PartG mbB

(56) References cited:
- EP-A1- 2 868 536
- DE-A1-102006 016 165
- DE-A1-102012 003 672

## Description

### FIELD OF THE INVENTION

The present invention relates to an electronic control unit of a vehicle, such as a car. More specifically, the present invention relates to an electronic control unit (ECU) capable of controlling the wiper nozzle of the vehicle, and a respective control method.

### BACKGROUND ART

It is common with vehicles, in particular cars, that the wiper system for cleaning the windshield is equipped with a nozzle (wiper nozzle) for sprinkling (splashing) water on the windshield, in order to support the cleaning operation of the windshield, especially at a time when there is no rain or only light rain. The wiper nozzle is normally located on the hood below the front windshield. The wiper nozzle is operated to sprinkle water on the windshield upon a respective instruction by the driver, which may, for instance, be given when operation of the wiper system is started, such as by pressing a wipe button, or it may also be given separately, if so desired by the driver.

However, it is a frequently occurring problem that the water sprinkled by the wiper nozzle of a car is also splashed onto the next car following behind (for instance, because the wiper nozzle is splashing the water rather strongly and/or is not well calibrated). For instance, when a car is standing in a traffic jam and the wiper nozzle is started in order to wash the windshield, the water will also splash on the car standing behind. Therefore, the car standing behind is also forced to wash its windshield, which is likely to affect the second car behind in the same manner and so on. A domino effect is the consequence.

Said problem is even more safety critical if it happens on the highway at high speed. A car being driven behind the car operating the wiper nozzle suddenly gets water on the windshield from the vehicle in front and the driver view is restricted, which might well lead to an accident. Even if the splashed water does not restrict the view of the driver of the car behind, already because of the unexpected event of getting water on the windshield, the driver might instinctively react in the wrong way and steer aggressively or brake suddenly, which might lead to an accident.

It is therefore desirable to avoid a situation where the splashed water from the wiper nozzle of a vehicle affects subsequently following vehicles, especially in dense traffic conditions. DE-A-102012003672 shows the preamble of claim 10.

### SUMMARY OF THE INVENTION

The present invention aims to provide a control method for controlling a wiper nozzle of a vehicle that is suitable for avoiding any negative effect from the water splashed by the wiper nozzle on vehicles following behind, and a respective electronic control unit adapted for performing a respective control.
This is achieved by the features of the independent claims.
According to a first aspect of the present invention, a method of controlling a wiper nozzle of a vehicle, performed by an electronic control unit of the vehicle, is provided. The method comprises the steps of receiving an instruction to operate the wiper nozzle and of receiving distance information indicating the distance between the vehicle and the next vehicle behind said vehicle, from a distance sensor device with which said vehicle is equipped. The method further comprises the step of judging, based on said received distance information, whether to operate the wiper nozzle or not.
According to a second aspect of the present invention, an electronic control unit for a vehicle for controlling a wiper nozzle of the vehicle is provided. The electronic control unit comprises a first receiving module for receiving an instruction to operate the wiper nozzle and a second receiving module for receiving distance information indicating the distance between said vehicle and the next vehicle behind said vehicle, from a distance sensor device with which said vehicle is equipped. The electronic control unit further comprises a judging module for judging, based on said received distance information, whether to operate the wiper nozzle or not.
It is the particular approach of the present invention that upon a driver of a vehicle instructing operation of the wiper nozzle to wash the windshield, the wiper nozzle is not immediately operated to splash water on the windshield. Rather, a judgment process is first initiated, wherein it is decided whether operation of the wiper nozzle in the current traffic situation may be critical or risky for other vehicles behind. The judgment is based at least on a distance between the vehicle of the driver who intends to operate the wiper nozzle and the next vehicle. In accordance with embodiments, the judgment can further take the current speed of the vehicle into account. If the judgment algorithm comes to the conclusion that there is a risk of affecting the next vehicle behind, no automated operation of the wiper nozzle will be launched without an additional confirming instruction from the driver.

In accordance with embodiments, the driver is first asked whether to proceed/how to proceed. In the simplest case, the driver is simply asked whether he/she intends to proceed with launching the wiper nozzle in the normal manner, despite the judgment by the ECU that operating the wiper nozzle may affect cars following behind. In more sophisticated embodiments, the driver may be offered a plurality of options for selection, which may, in particular, include the possibility of operating the wiper nozzle with lowered angle and/or reduced water pressure.

Preferably, a respective indication is output to the driver if it is judged not to operate the wiper nozzle based on the received distance information. Said indication is preferably a visual indication (such as an indication that the next car is close behind) given on the instrument cluster of the vehicle or any other visualizing device such as a Head Up display or a Head Unit HMI (Human-Machine-Interface). Alternatively, or in addition an acoustic indication by a well-defined acoustic signal is possible.

In accordance with a preferred embodiment, the operation of the wiper nozzle is automatically launched if it is judged to operate the wiper nozzle in the judgment algorithm. If it is judged not to operate the wiper nozzle in the judgment algorithm, forced operation of the wiper nozzle is nevertheless possible by the driver issuing a second instruction to operate the wiper nozzle despite the negative judgment. Thereby, the driver can confirm that it is nevertheless desirable to operate the wiper nozzle immediately. Particularly preferably, said confirming instruction is issued in response to an indication that it has been judged not to (automatically) operate the wiper nozzle, in view of other vehicles behind.

In accordance with another preferred embodiment, the indication indicates a plurality of options on how to proceed, and the method further comprises the step of receiving a driver's selection of one of the proposed options. More preferably, the options include at least one of operating the wiper nozzle with lowered angle and/or reduced water pressure, postponing the operation of the wiper nozzle until a different judgment is performed in a repeated execution of the judgment step, or not operating the wiper nozzle at all. Such an embodiment may also be considered as offering the driver an operation of the wiper nozzle in a "restricted mode", which is restricted as compared to the "normal mode", which is applied if the judgment results in that there is no risk of affecting the following vehicle and which means an automatic launching of the wiper nozzle is normal, i.e. without reduced operation parameters. Postponing the operation means entering a control loop, wherein the judgment step is repeated based on at least updated distance information (optionally also updated speed information), and, in the case of a different judgment based on the updated information, an indication is issued asking the driver whether he/she will now proceed with operating the wiper nozzle in the normal mode. Not operating the wiper nozzle at all means that the control processing ends and the ECU waits for a new instruction to operate the wiper nozzle.

Preferably, the judgment is further based on speed information about the current speed of the vehicle. Said speed information is received from a velocity sensor, such as an odometer, which is a common piece of equipment in every vehicle.

Preferably, it is judged to immediately operate the wiper nozzle if the distance indicated by the distance information is larger than a predetermined distance. This means that the following car is far enough away to be most probably remain unaffected by splashing water from the wiper nozzle.

More preferably, the algorithm additionally takes into account the current speed, which may be taken as a good indicator of the current traffic situation, in order to determine an appropriate value of said predetermined distance. Specifically, the predetermined distance may be determined to be the larger, the higher the speed of the vehicle is.

In accordance with a particular preferred embodiment, a fixed value of the predetermined distance is taken as long as the current speed of the vehicle is low (lower than a predetermined speed). In such a case, it is assumed that most probably a traffic jam situation has occurred, and it is sufficient to prevent the wiper nozzle from automatically operating and to issue an indication to the driver if the next vehicle comes particularly close to the current vehicle (for example, closer than 2 meters). If, on the other hand, the current speed of the vehicle is high (higher than the predetermined speed), it is assumed that a driving on a highway situation is likely. In that situation, a variable value of the predetermined distance is determined, based on the current speed. More preferably, the variable value is determined so as to correspond to the distance a vehicle covers at the current speed during the time period for which the wiper nozzle is normally operated (for instance: 2 seconds).

In accordance with preferred embodiments, the judgment additionally takes into account the side distances from the vehicle to other objects located sideways of the vehicle. For this purpose, the ECU is provided with side distance information obtained by means of at least one side distance sensor device with which the vehicle is equipped. Preferably, there are side distance sensor devices for the left-hand side and for the right-hand side of the vehicle. The objects located sideways of the vehicle may include other vehicles (such as vehicles overtaking the vehicle implementing the invention or vehicles of the opposing traffic or vehicles located sideways of the vehicle implementing the invention in a traffic jam), but also fixed objects or people standing or moving alongside the vehicle, for instance on a pavement. Such embodiments take into account that vehicles or people located sideways may also be affected by the wiper nozzle, especially when the angle under which the water is splashed is poorly adjusted.

Preferably, the judgment takes into account the side distance information in such a manner that the wiper nozzle is not immediately operated but a notification is given to the driver if at least the distance between the vehicle and one further object is too small to avoid being affected by the splashed water. Hence, in such embodiments a notification is issued even if it is judged that no other vehicle is closely behind the vehicle implementing the invention, if a side distance is judged to be so small that the object located sideways may be affected.

Also preferably, the judgment based on the received side distance information is performed independently of the speed of the vehicle. More preferably, the wiper nozzle is immediately operated when there is no object located sideways from the vehicle at a distance smaller than a predetermined fixed distance (provided that there is no rear distance information leading to a different judgment) and the wiper nozzle is not immediately operated but a notification to the driver is issued when there is another object located sideways at a distance smaller than the predetermined fixed distance.

Preferably, the electronic control unit performing the control algorithm of the present invention is the Head Unit (Infotainment System) of the vehicle. However, alternatively, the control algorithm of the present invention can also be implemented in another ECU that the vehicle is equipped with. This may be an ECU performing other control functions as well, but it might also be an ECU specifically designated for a control process in accordance with the present invention.

In accordance with a further particular aspect of the present invention, a vehicle comprising an electronic control unit according to the second aspect and a distance sensor device for determining the distance between said vehicle and the next vehicle behind said vehicle is provided.

Preferably, the vehicle is further equipped also with distance sensors for determining the side distance between the vehicle and objects located sideways of the vehicle, to be taken into account in the judgment.

In accordance with still another particular aspect of the present invention, a computer program product is provided. The computer program product comprises computer readable code for performing all steps of a method according to the first aspect of the invention, when executed by a computer included in a vehicle.

Further features and advantages of the present invention are set forth in dependent claims.

### BRIEF DESCRIPTION OF THE DRAWINGS

Additional features and advantages of the present invention will become apparent in the following and more particular description, as illustrated in the accompanying drawings, wherein:
Fig. 1 explains a situation in which the control algorithm according to the present invention can be beneficially used;
Fig. 2 illustrates a notification to a driver about a car behind, which leads to the conclusion that the wiper nozzle should not be automatically operated, in accordance with an embodiment of the present invention;
Fig. 3a illustrates a notification to a driver in accordance with another embodiment of the present invention, wherein there is foreseen an operation of the wiper nozzle in a restricted mode offering the driver plural options for selection;
Fig. 3b illustrates a notification to a driver indicating that a risk to impact a car behind has vanished, in the framework of a postponement of the nozzle operation in a restricted operation mode;
Fig. 4 provides an overview of the system architecture wherein the present invention is preferably used;
Fig. 5 is a functional block diagram of an electronic control unit in accordance with embodiments of the present invention;
Fig. 6 is a flowchart illustrating the operation of a method in accordance with a particular embodiment of the present invention; and
Fig. 7 is a flowchart illustrating the operation in accordance with another particular embodiment of the present invention.

### DETAILED DESCRIPTION

The present invention provides a control method for the wiper nozzle of a vehicle, wherein the control is based on information on the current traffic situation, in particular with respect to other vehicles that are located (being driven) immediately behind a vehicle wherein the present invention is implemented. Thereby, the present invention generally contributes to improving safety in vehicles and also enhances the driver's well-being.

In accordance with an embodiment of the present invention, the following control is performed: once the user presses the wipe button or performs another operation for instructing the wiper nozzle to operate, the system (Head Unit or other ECU adapted for implementing the present invention) will check before launching the nozzle what speed the car is currently travelling at and if there are cars standing/following behind and at what distance. If the algorithm judges that this might be critical to other cars, an indication about this will then be shown to the driver and the driver will decide to continue or to stop.

In another embodiment, the nozzle has two modes to operate: restricted and normal. The nozzle operates in the normal mode, if it is judged, based on the distance information (and optionally also on the speed information) that there is no other vehicle so closely behind the vehicle implementing the present invention, that there is a considerable risk of affecting the other vehicle. Hence, in the normal mode, the wiper nozzle will be automatically and immediately operated as usual upon receiving an instruction issued by the driver.

The restricted mode operation is performed if it is judged that there is another vehicle which is most likely to be affected by the normal operation of the wiper nozzle closely behind. In the restricted mode, an indication is shown to the driver to make her/him choose between three options on how to further proceed:
a) Launch the nozzle with lowered angle and reduced water pressure.
b) Postpone the launch of the nozzle (including triggering the system to inform the driver once there is no longer any risk).
c) Do not launch the nozzle.

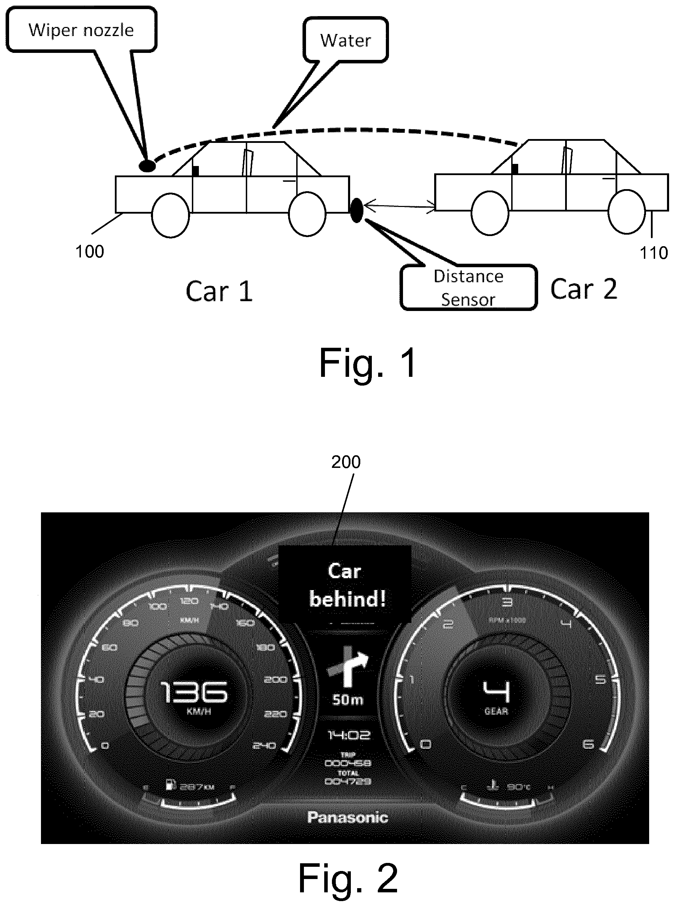

A typical situation wherein the application of the present invention is beneficial is illustrated in Fig. 1. A first car 100 ("Car 1") is being driven in front of a second car 110 ("Car 2"). The driver of the first car 100 operates the wiper nozzle to splash water on his windshield. At the same time, a part of the water splashes on the second car 110 being driven behind the first car, and in particular on the windshield thereof.

Said situation can be avoided if a distance sensor, with which Car 1 is equipped, is used to perform wiper nozzle control in accordance with the present invention. By means of employing the distance sensor to determine the distance between Car 1 and Car 2, operation of the wiper nozzle can be avoided if the cars are too close to each other, unless it is absolutely necessary (and therefore confirmed by a driver's second instruction).

Also, the present invention can be applied in an analogous manner to protect othe objects, in particular other vehicles or people located sideways of the vehicle the wiper nozzle of which is to be launched.

Distance sensors on the rear side of cars are quite common at present and are normal equipment. For instance, such distance sensors are useful in connection with parking assistance. Thus, the additional use of a rear distance sensor that a vehicle is anyway equipped with can be implemented without requiring additional hardware. Also, side distance sensors are quite common, such as in connection with the detection of the lane boundary.

Distance sensors suitable for implementing the present invention can be of different types, such as ultrasonic sensors, radar sensors or ToF (time-of-flight) cameras.

Fig. 2 illustrates how a notification (indication) to the driver, indicating that operation of the wiper nozzle, may affect or be risky to other cars, and therefore the driver's instruction to operate the wiper nozzle is not automatically followed. The notification 200 ("Car behind!") is displayed on a display (in the illustrated case: the instrument cluster) once the system detects that the car is within a certain range and might be affected by use of the nozzle.

Fig. 2 provides only one of a plurality of possibilities of how the information that the system is prevented from automatically operating the wiper nozzle, in view of the distance to the next car behind, can be visualised to the driver. Generally speaking, visualisation can be performed by displaying a predefined message on the instrument cluster or any other visualizing device, such as Head Up display, Head Unit HMI etc., in case the Head Unit or other ECU responsible for implementing the present invention judges that using the nozzle will have an impact on the car behind. Alternatively, for instance, also an indication by means of a specific indicator, such as a specifically designated LED, is possible.

Upon the indication being displayed, the driver may decide whether he/she would like to nevertheless proceed with operating the wiper nozzle (and confirm this with a respective instruction) or rather wait until the car has moved out of range. Of course, the specific text ("Car behind!") illustrated in Fig. 2 is also only an example. For instance, another possible message may explicitly include a question asking the driver whether to proceed or wait.

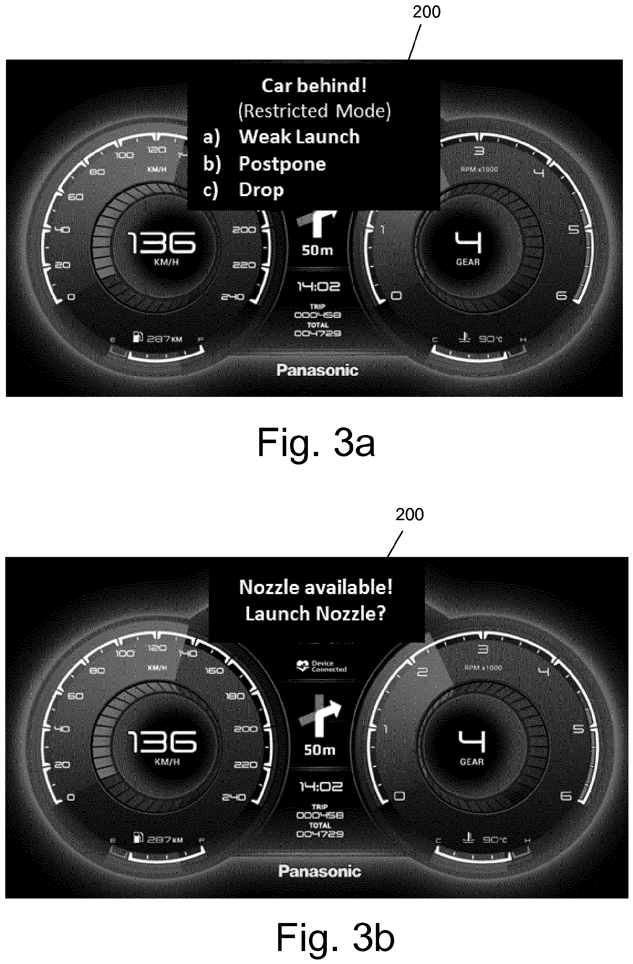

Fig. 3a provides an example of a notification 200, which additionally offers the driver the possibility of selecting one of a plurality of options of proceeding with operation in the restricted mode. The options correspond to the processing explained above under items a) to c).

Specifically, "Weak Launch" (a)) means to operate the nozzle with a lowered angle and reduced water pressure. "Postpone" (b)) means to postpone the launch of the nozzle until the traffic situation behind the vehicle implementing the invention changes. "Drop" (c)) means not to launch the nozzle at all upon the foregoing instruction.

Fig. 3b provides an example of a notification 200, which is issued in case the driver has selected option b) as indicated in Fig. 3a. In this case, the ECU shifts to a control loop, wherein the received sensor information is regularly updated and the judgment process is repeated based on the up-to-date sensor information, until it is judged that there is no vehicle so close behind the vehicle implementing the invention anymore, so that normal operation of the nozzle represents no more a risk. As soon as such a judgment takes place, the indication 200 as shown in Fig. 3b is indicated to the driver. In this case, the driver can then decide whether he/she wants to launch the nozzle in the same manner as in the normal mode, i.e. without reduction in angle or water pressure, in a similar manner as described above with reference to Fig. 2.

In accordance with embodiments, there are different possibilities how the driver can perform the necessary operations for reacting on notifications described above with reference to Figs. 2 and 3 such as selecting one of the options available in the restricted mode or deciding whether or not to launch the nozzle. For instance this may be performed by means of operating a button or other operation element arranged on the steering wheel or close thereto and suitable for selecting a menu point on the display. Another option is an operation via voice control. Also, if the indication is given on a display having a touch screen function such as a touch screen of the Head Unit or a navigation system, a respective operation via touch screen is possible. Of course, the operation according to the invention is not limited to the above examples.

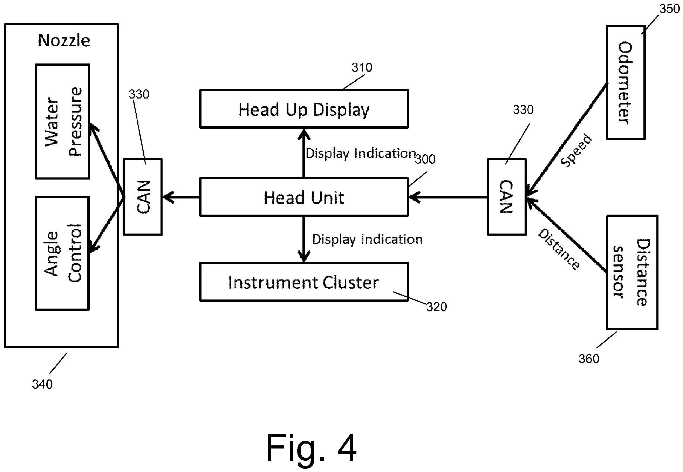

Fig. 4 gives an overview of the overall architecture in which the present invention is implemented. In the example of Fig. 4, the electronic control unit implementing the invention is the Head Unit 300 of the vehicle. Specifically, this figure shows a plurality of modules that may be involved to realise the present invention in accordance with embodiments thereof.

The Head Unit 300 is connected to the CAN (Controller Area Network) bus 330 of the vehicle. Via CAN bus 330, Head Unit 300 is provided with a request (instruction) to operate nozzle 340, with distance information from distance sensor 360 (and possibly also with side distance information from side distance sensors not explicitly shown in the drawing), and optionally, as illustrated in the present embodiment, also with speed information from an odometer 350. Although Fig. 4 illustrates a CAN bus, this is only one of possible implementations. A skilled person is aware of other suitable bus technologies applicable in a vehicle such as LIN or MOST. Each suitable bus technology currently available or being introduced in the future can be used in the framework of the present invention.

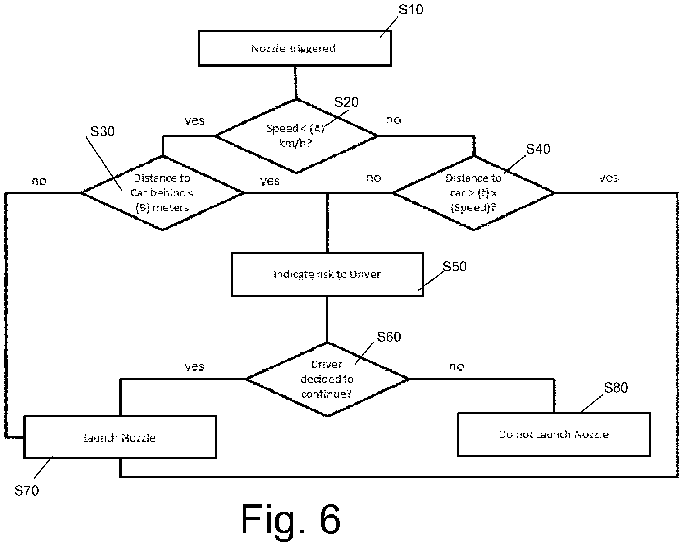

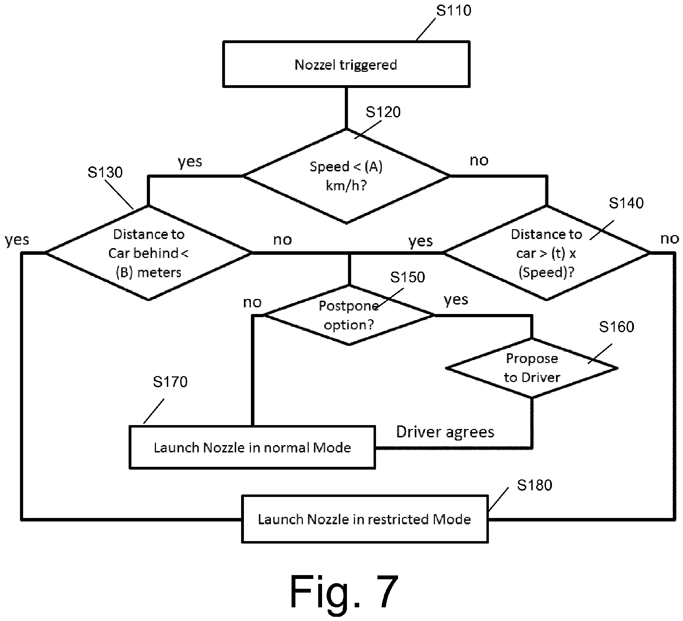

Head Unit 300 decides if the wiper nozzle can be operated without risk or if a notification needs to be displayed, based on an algorithm, examples of which will be explained below with reference to Figs. 6 and 7.

In case a notification (indication) 200 needs to be displayed, i.e. the wiper nozzle 340 waits for confirmation or is to be operated in the restricted mode, as illustrated in Figs. 2 and 3a above, and this can be done on a plurality of available displays (selectively or concurrently). Fig. 4 illustrates, by way of example, Head Up Display 310 and Instrument Cluster 320 as possible display targets for displaying the indication 200.

In the case of an embodiment providing the restricted mode, as illustrated in Fig. 3a, if the driver selects option a) ("Weak Launch"), the ECU issues an instruction to launch the wiper nozzle with lowered angle and reduced water pressure. This is indicated by the boxes "Angle Control" and "Water Pressure" in box 340 on the left-hand side of Fig. 4. Of course, in embodiments within the framework of the present invention, it is also possible that only one of the above parameters is reduced as compared to the normal operation.

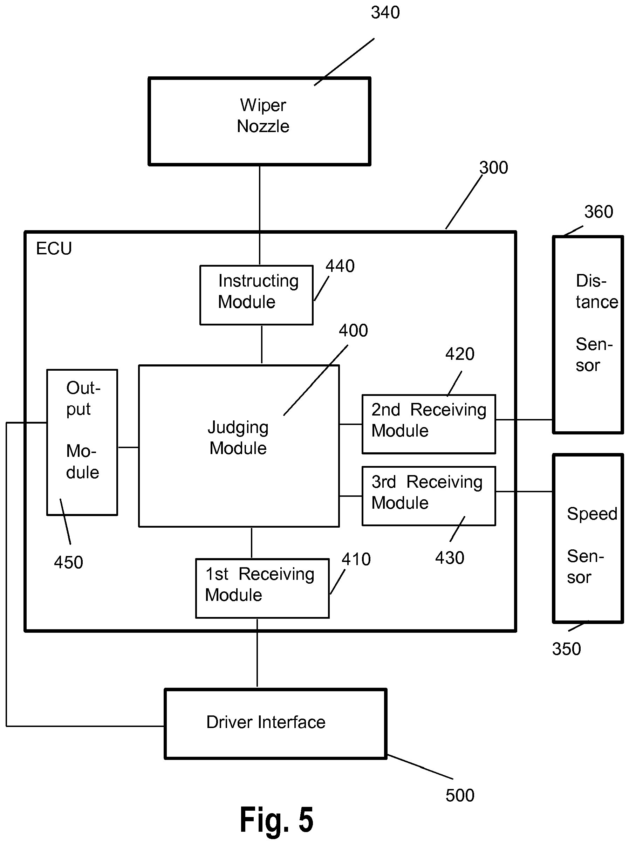

Fig. 5 is a more specific illustration of the modular structure of an electronic control unit 300 (which may, in particular, be the Head Unit or be included in the Head Unit) for implementing the present invention.

ECU 300 comprises a judging module 400, which is connected with first receiving module 410, second receiving module 420, third receiving module 430, instructing module 440 and output module 450.

The first receiving module 410 is connected to driver interface 500, such as a button for operating the wiper nozzle 340, for receiving the respective instruction issued by the driver. In alternative implementations, the respective instruction may be issued automatically, without driver interference. For instance, the instruction may be triggered by an event such as detecting that the windscreen is dirty.

The second receiving module 420 is connected to distance sensor 360 for receiving the distance information, and, if applicable, also to side distance sensors for receiving side distance information. The (optional) third receiving module 430 is connected to the speed metering device (such as an odometer) 350 for receiving the speed information about the vehicle. On the other hand, output module 450 connects the judging module 400 with the driver interface 500 (including, in particular, the plural possible display units). Finally, according to the embodiment there is a separate instructing module 440 that is connected to judging module 400 for issuing a signal, based on the judgment by the judging module, for being forwarded to the wiper nozzle 340 for instructing operation thereof.

Specifically, in case of operation in a restricted mode as described above, instructing module 440 forwards a signal received from the judging module 400 for instructing the wiper nozzle 340 to operate with reduced water pressure and/or lowered angle, if it has been judged that operation in the normal mode is not possible and the driver has selected the option "Weak Launch" in response to a respective indication.

It has to be noted that any modules of the ECU 300 illustrated in the drawing can be implemented by means of software modules or hardware modules or a combination thereof. Also, the term "module" is basically intended to specify a functional unit, which does not necessarily need to be implemented as a separate physical entity. For instance, the first, second and third receiving modules 410, 420 and 430, respectively, may be implemented in the form of a single physical receiving module, which may, for instance, connect the ECU (Head Unit) with the CAN bus of the vehicle, as illustrated in Fig. 4. Further, also the output of signals/instructions can be performed in the same manner via the vehicle bus.

Fig. 6 is a flowchart illustrating the operation of an algorithm in accordance with an embodiment of the present invention, wherein the driver is simply asked to confirm operation of the nozzle 340 if it is judged that other vehicles which may be affected are close. Specifically, Fig. 6 explains the algorithm steps, based on which the ECU/Head Unit can decide whether or not a notification shall be shown to the driver.

In accordance with the embodiment, once the nozzle button is triggered by the driver at step S10, the algorithm will first check the speed of the car delivered by the odometer (S20).

In case the current speed is less than a predefined value (A), which may preferably be assumed to bein the range of 5 km/h to 50 km/h, more preferably between 10 and 40 km/h, still more preferably between 15 and 30 km/h, for instance 20 km/h, it is assumed that the car (vehicle) is most probably in a traffic jam situation. In this scenario (S20: yes), processing proceeds to step S30. In step S30, the distance to the car 110 behind is checked. If the distance is larger than a predefined value (B), which may be assumed, by way of example only and without being limited, to be 2 m (S30: no), then there is no need for any notification. In this case, the processing proceeds to step S70 and the nozzle 340 is launched to splash water.

If the distance is less than (B), for example less than 2 m (S30: yes), a notification will be issued at step S50 to ask the driver if he/she really wants to proceed.

The same processing as described above with reference to step S30 can, in principle, also be applied for an optional judgment based on the side distance between the car and another vehicle or object. Possibly, a different value of the predetermined distance is applied for a judgment based on the side distance information than on the (rear) distance information.

In case the current speed is higher than the predefined value (A), it is assumed that the car is most probably in a driving on a highway situation. In this scenario (S20: no), processing proceeds to step S40. In step S40, the distance to the car 110 behind is checked. More specifically, it is checked whether the distance is larger than a predetermined time period multiplied with the speed (t * speed). If this is the case, it is decided that no notification is necessary (S40: yes). In that case, processing proceeds to step S70 and the nozzle 340 is launched to splash water.

A typical time period t is, for example, 2 s (seconds). In that case, the distance threshold is T = 2 s * 140 km/h ≈ 77 m (meters), if it is further assumed that the car is travelling at a speed of 140 km/h.

On the other hand, if the distance is less than the value of (t * speed), for example less than T = 2 s* 140 km/h ≈ 77 m, processing proceeds from step S40 (no) to step S50 to ask the driver if he/she really wants to proceed.

As a background for the above example value of t = 2 s, it is noted that t should correspond to the time period during which a driver typically pushes on the nozzle button to wash the windshield. As an average, the driver will keep pushing on the nozzle/splashing water for approximately 2 s. This explains the formula proposed in the illustrated embodiment. Namely, the distance calculated by said formula corresponds to the traveling distance of the vehicle at the given speed during the operation time of the nozzle. Thus, by applying said formula, the judging module 400 checks whether the distance is large enough to avoid the car 110 behind reaching the position of the car in front while the nozzle 340 is being operated. The formula is based on the simplification assuming that both cars are driving at the same speed and thus the distance is constant.

In principle, it is also not excluded that, in an embodiment employing a more sophisticated algorithm, the latter simplifying assumption is dropped. The speed of the next following vehicle 110 can be taken into account by evaluating the measurement results of the distance sensor 360 over time, which gives an indication about the relative speed of the vehicle 100 implementing the invention and the next vehicle 110.

After a notification (indication) to the driver is issued in step S50, in subsequent step S60, the driver can decide whether he/she wants to continue. If the driver does want to continue (S60: yes) and issues a respective confirming second instruction, processing proceeds to step S70, wherein the nozzle is launched in spite of the judgment of the judging module 400. If, on the other hand, the driver does not decide to continue (S60), processing proceeds to step S80, i.e. the nozzle 340 is not launched. Specifically, the ECU may wait for a confirming instruction by the user for a predetermined time such as one or a few seconds. If no confirming instruction has been received by the expiry of said time period, the system assumes that the wiper nozzle is not to be launched this time and returns to its initial state, awaiting a next (initial) driver instruction (step S10).

The above algorithm as illustrated is only an example to show how the concept according to the present invention can be realized. As mentioned above, other user cases where both cars are driving at different speeds and distance are within the scope of the present invention, and a skilled person is aware of how to implement such details in the overall framework of the present invention. Also, the particular exemplary figures such as 2 m and 2 s are given by way of example only and can be changed into any other suitable values. Further, in the simplest case, even a mere distance based judgment can be realized in the framework of the present invention, without taking speed information into account. In this case, the distance between a car 100 and the following car 110 is simply compared with a predetermined average value, which has to be typically chosen somewhere in the range between the examples of 2 m and 77 m indicated above, or even slightly larger.

In another simplified implementation, the speed information can be taken into account by storing a look-up table (LUT) in the ECU. In the LUT, intervals of speeds may be each associated with a fixed distance value. The fixed distance value may, for instance, be calculated on the basis of the above formula, wherein the median (or any other) speed of then interval is taken as the speed for calculation. For performing the judgment according to the present invention, the ECU retrieves the distance value, corresponding to the interval within which the current speed falls, from the LUT. Thereby, a velocity dependent distance value for the judgment can be determined without the need to perform a calculation each time.

Fig. 7 is a flowchart illustrating the operation of an algorithm in accordance with another embodiment of the present invention, wherein a restricted mode is foreseen, in case of a respective judgment as described above.

Initial steps S110 to S140 correspond to steps S10 to S40 of Fig. 6. A detailed description thereof is therefore omitted. All examples and particular exemplary values of figures etc. described above in connection with the judgment in steps S20, S30 and S40 of Fig. 6 apply in the same manner to the judgment in steps S120, S130 and S140 of the embodiment of Fig. 7.

If it is judged that the distance to the following car is smaller than a predetermined fixed distance in step S130 (S130: yes) or smaller than a speed-dependent predetermined distance in step S140 (S140: no), processing proceeds to step S180, i.e. the ECU decides to perform operation in the restricted mode.

As described above, operation in restricted mode generally means that the driver is offered a plurality of options for selection. The details of the further processing are not shown in Fig. 7.

In the simplest case, the driver may decide not to proceed at all (such as by selecting option c) "Drop" in Fig. 3a). In this case, the control processing ends and the ECU awaits new instructions.

If a restricted operation with reduced parameters is selected (such as by selecting option a) "Weak Launch" in Fig. 3a), the wiper nozzle 340 is instructed accordingly (not shown in Fig. 7), and the control processing also ends.

If postponement of operation of the wiper nozzle 340 is selected (such as by selecting option b) "Postpone" in Fig. 3a), operation returns from step S180 to step S120 (also not shown in Fig. 7). In this case, the algorithm keeps running in a loop (with a preset frequency) without any additional trigger from the user. Once the system detects that there is no remaining risk for the car behind, the system will ask the driver if he/she wants to launch the nozzle in normal mode again. This is accomplished by a further indication to the driver on the predetermined display means, such as given in Fig. 3b by way of example.

In accordance with the above, judgment steps S120, S130 and S140 can be performed in two different situations. The first situation corresponds to an initial performance of the steps, immediately after step S110 of triggering the nozzle. The second situation corresponds to a performance of the step in a control loop (not shown), after a postponement instruction has been issued in reply to having been offered to the driver in a restricted mode. In the second situation, as long as the initial judgment (S130: yes or S140: no) is confirmed, the loop remains running and processing does not proceed to step S180 again, in contrast to the first situation.

If, on the other hand, it is judged in step S130 that the distance to the following car is not smaller than the predetermined fixed distance in step S130 (S130: no) or not smaller than the speed-dependent predetermined distance in step S140 (S140: yes), processing proceeds to step S150, in which it is determined, whether the processing went through the respective judgment step initially, after step S110, or in the repetition loop, in the framework of the postponement option.

If it is determined in step S150 that the respective judgment is performed initially (S150: no), processing proceeds to step S170, so that the wiper nozzle 340 is immediately automatically launched in normal mode, i.e. without restrictions to parameters etc.

If, on the other hand, it is determined in step S150 that the processing went through the respective judgment step in a control loop of the postponement option (S150: yes), processing proceeds to step S160, wherein an indication 200 is displayed requesting a query to the driver as to whether the wiper nozzle 340 should (now) be launched in the normal mode. If this is the case (S160: Driver agrees), processing proceeds to step S170, wherein the wiper nozzle 340 is launched in the normal mode. In the opposite case (not illustrated), the control processing ends and awaits the next initial driver instruction (S110).

The present invention as defined by the appended claims is not limited to those particular embodiments that have been described in detail above. The particular features of embodiments described herein can be combined as long as this does not lead to contradictions. A person skilled in the art is aware of further modifications of the described embodiments within the scope of the claims.

In summary, the present invention provides an algorithm for an intelligent control of a wiper nozzle in a car. Wiper nozzle control is performed on the basis of at least distance information, measured by a distance sensor of the car, at least between said car and the next following car. If the distance is sufficiently large so that there is a negligible risk of affecting the next following car by the water being splashed by the wiper nozzle of a car driving in front, any instruction of operating the wiper nozzle is automatically followed. If, on the other hand, the distance is small so that there is a considerable risk, a notification is issued for leaving it up to the driver whether or not to operate the wiper nozzle. Specifically, the wiper nozzle may be triggered to operate in a "restricted mode", wherein the driver may decide whether to operate the wiper nozzle with reduced angle and/or water pressure, or to await the clearance of the risk situation, or to completely stop operation of the nozzle.

## Claims

1. A method of controlling a wiper nozzle (340) of a vehicle (100), performed by an electronic control unit (300) of the vehicle (100), the method comprising the steps of:
receiving (S10; S110) an instruction to operate the wiper nozzle (340);
receiving distance information indicating the distance between said vehicle (100) and a next vehicle (110) behind said vehicle (100), from a distance sensor device (360) with which said vehicle (100) is equipped; and
judging (S20, S30, S40; S120, S130, S140), based on said received distance information, whether to operate the wiper nozzle (340) or not.

2. A method according to claim 1, further comprising the step of outputting (S50; S180) an indication (200) to the driver if it is judged in said judging step (S20, S30, S40; S120, S130, S140) not to operate the wiper nozzle (340) based on the received distance information.

3. A method according to claim 2, wherein said indication (200) indicates a plurality of options on how to proceed, and the method further comprises the step of receiving a driver's selection of one of the proposed options.

4. A method according to claim 3, wherein said options include at least one of operating the wiper nozzle (340) with lowered angle and/or reduced water pressure, postponing the operation of the wiper nozzle (340) until a different judgment is performed in a repeated execution of said judgment step (S120, S130, S140), or not operating the wiper nozzle (340) at all.

5. A method according to any of claims 1 to 4,
further comprising the step of receiving speed information indicating the speed of the vehicle (100) from a velocity sensor (350) of said vehicle (100), wherein
said judgment in said judging step (S20, S30, S40; S120, S130, S140) is further based on said received speed information.

6. A method according to any of claims 1 to 5, wherein it is judged to operate the wiper nozzle (340) if the distance indicated by said distance information is larger than a predetermined distance.

7. A method according to claim 6,
further comprising the step of receiving speed information indicating the speed of the vehicle (100) from a velocity sensor (350) of said vehicle (100),
wherein said predetermined distance depends on the speed indicated by said speed information.

8. A method according to claim 7, wherein said predetermined distance is a fixed value (B), when the speed indicated by said speed information is lower than a predetermined speed (A) and is proportional to the speed when the speed indicated by said speed information is higher than said predetermined speed (A).

9. A method according to any of claims 1 to 8, further comprising the step of
receiving side distance information indicating the distance between said vehicle (100) and another object located sideways of said vehicle from at least one side distance sensor device with which said vehicle is equipped, wherein
said judging is further based on said side distance information.

10. An electronic control unit for a vehicle (100) for controlling a wiper nozzle (340) of the vehicle (100), said electronic control unit comprising
a first receiving module (410) for receiving an instruction to operate the wiper nozzle (340); **characterized by** further comprising a second receiving module (420) for receiving distance information indicating the distance between said vehicle (100) and a next vehicle (110) behind said vehicle (100), from a distance sensor device (360) with which said vehicle (100) is equipped; and
a judging module (400) for judging, based on said received distance information, whether to operate the wiper nozzle (340) or not.

11. An electronic control unit according to claim 10, further comprising an output module (450) for outputting an indication (200) to the driver if it is judged by said judging module (400) not to operate the wiper nozzle (340) based on the received distance information.

12. An electronic control unit according to claim 11, wherein said indication (200) indicates a plurality of options on how to proceed, and the first receiving module is further adapted to receive a driver's selection of one of the proposed options.

13. An electronic control unit according to claim 12, wherein
said options include operating the wiper nozzle (340) with lowered angle and/or reduced water pressure, the electronic control unit further comprising
an instructing module (440) for instructing the wiper nozzle (340) to operate with lowered angle and reduced water pressure, if said option is selected by the driver.

14. An electronic control unit according to any of claims 10 to 13,
further comprising a third receiving module (430) for receiving speed information indicating the speed of the vehicle (100) from a velocity sensor (350) of said vehicle (100), wherein
said judgment by said judging module (400) is further based on said received speed information.

15. An electronic control unit according to any of claims 10 to 14, wherein said judging module (400) judges to operate the wiper nozzle (340) if the distance indicated by said distance information is larger than a predetermined distance.

## Patentansprüche

1. Verfahren zum Steuern einer Schweibenwischerdüse (340) eines Fahrzeugs (100), ausgeführt von einer elektronischen Steuereinheit (300) des Fahrzeugs (100), wobei das Verfahren die Schritte umfasst:
Empfangen (S10;S110) einer Anweisung, die Scheibenwischerdüse (340) in Betrieb zu nehmen;
Empfangen von Abstandsinformation, die den Abstand zwischen dem Fahrzeug (100) und einem nächsten Fahrzeug (110) hinter dem Fahrzeug (100) angibt, von einer Abstandssensoreinrichtung (360), mit der das Fahrzeug (100) ausgerüstet ist; und
Beurteilen (S20, S30, S40; S120, S130, S140), beruhend auf der empfangenen Abstandsinformation, ob die Scheibenwischerdüse (340) in Betrieb zu nehmen ist oder nicht.

2. Verfahren nach Anspruch 1, weiterhin umfassend den Schritt des Ausgebens (S50; S180) eines Hinweises (200) an den Fahrer, wenn in dem Beurteilungsschritt (S20, S30, S40; S120, S130, S140) beurteilt wird, beruhend auf der empfangenen Abstandsinformation, die Scheibenwischerdüse (340) nicht in Betrieb zu nehmen.

3. Verfahren nach Anspruch 2, wobei der Hinweis (200) eine Mehrzahl von Optionen angibt, wie fortzufahren ist, und das Verfahren weiterhin den Schritt umfasst des Empfangens einer Fahrerauswahl einer der vorgeschlagenen Optionen.

4. Verfahren nach Anspruch 3, wobei die Optionen wenigstens eine enthalten von: Betreiben der Scheibenwischerdüse (340) mit verringertem Winkel und/oder reduziertem Wasserdruck, Verschieben des Betriebs der Scheibenwischerdüse (340), bis eine andere Beurteilung in einer wiederholten Ausführung des Beurteilungsschritts (S120, S130, S140) erfolgt, oder die Scheibenwischerdüse (340) überhaupt nicht in Betrieb nehmen.

5. Verfahren nach einem der Ansprüche 1 bis 4,
weiterhin umfassend den Schritt des Empfangens von Geschwindigkeitsinformation, die die Geschwindigkeit des Fahrzeugs angibt, von einem Geschwindigkeitssensor (350) des Fahrzeugs (100), wobei
die Beurteilung in dem Beurteilungsschritt (S20, S30, S40; S120, S130, S140) weiterhin auf der empfangenen Geschwindigkeitsinformation beruht.

6. Verfahren nach einem der Ansprüche 1 bis 5, wobei beurteilt wird, die Scheibenwischerdüse (340) in Betrieb zu nehmen, wenn der von der Abstandsinformation angegebene Abstand größer ist als ein vorbestimmter Abstand.

7. Verfahren nach Anspruch 6,
weiterhin umfassend den Schritt des Empfangens von Geschwindigkeitsinformation, die die Geschwindigkeit des Fahrzeugs (100) angibt, von einem Geschwindigkeitssensor (350) des Fahrzeugs (100),
wobei der vorbestimmte Abstand von der durch die Geschwindigkeitsinformation angegebenen Geschwindigkeit abhängt.

8. Verfahren nach Anspruch 7, wobei der vorbestimmte Abstand ein fester Wert (B) ist, wenn die von der Geschwindigkeitsinformation angegebene Geschwindigkeit niedriger ist als eine vorgeschriebene Geschwindigkeit (A) und die Geschwindigkeit proportional ist, wenn die von der Geschwindigkeitsinformation angegebene Geschwindigkeit höher ist als die vorbestimmte Geschwindigkeit (A).

9. Verfahren nach einem der Ansprüche 1 bis 8, weiterhin den Schritt umfassend:
Empfangen von Seitenabstandsinformation, die den Abstand zwischen dem Fahrzeug (100) und einem anderen Objekt, welches sich seitlich des Fahrzeugs befindet, angibt, von wenigstens einer Seitenabstandssensoreinrichtung, mit der das Fahrzeug ausgerüstet ist, wobei
das Beurteilen weiterhin auf der Seitenabstandsinformation beruht.

10. Elektronische Steuereinheit für ein Fahrzeug (100) zum Steuern einer Scheibenwischerdüse (340) des Fahrzeugs (100), wobei die elektronische Steuereinheit umfasst:
ein erstes Empfangsmodul (410) zum Empfangen einer Anweisung, die Scheibenwischerdüse (340) in Betrieb zu nehmen;
**gekennzeichnet durch**
ein zweites Empfangsmodul (420) zum Empfangen von Abstandsinformation, die den Abstand zwischen dem Fahrzeug (100) und einem nächsten Fahrzeug (110) hinter dem Fahrzeug (100) angibt, von einer Abstandssensoreinrichtung (360), mit der das Fahrzeug (100) ausgerüstet ist; und
ein Beurteilungsmodul (400) zum Beurteilen, beruhend auf der empfangenen Abstandsinformation, ob die Scheibenwischerdüse (340) in Betrieb zu nehmen ist oder nicht.

11. Elektronische Steuereinheit nach Anspruch 10, weiterhin umfassend ein Ausgabemodul (450) zum Ausgeben eines Hinweises (200) an den Fahrer, wenn das Beurteilungsmodul (400) beurteilt, beruhend auf der empfangenen Abstandsinformation, die Scheibenwischerdüse (340) nicht in Betrieb zu nehmen.

12. Elektronische Steuereinheit nach Anspruch 11, wobei der Hinweis (200) eine Mehrzahl von Optionen angibt, wie fortzufahren ist, und das erste Empfangsmodul weiterhin angepasst ist, eine Fahrerauswahl einer der vorgeschlagenen Optionen zu empfangen.

13. Elektronische Steuereinheit nach Anspruch 12, wobei
die Optionen enthalten: Betreiben der Scheibenwischerdüse (340) mit verringertem Winkel und/oder reduziertem Wasserdruck und die elektronische Steuereinheit weiterhin umfasst:
ein Anweisungsmodul (440) zum Anweisen der Wischerdüse (340), mit verringertem Winkel und reduziertem Wasserdruck zu arbeiten, wenn diese Option durch den Fahrer ausgewählt wird.

14. Elektronische Steuereinheit nach einem der Ansprüche 10 bis 13,
weiterhin umfassend ein drittes Empfangsmodul (430) zum Empfangen von Geschwindigkeitsinformation, die die Geschwindigkeit des Fahrzeugs (100) angibt, von einem Geschwindigkeitssensor (350) des Fahrzeugs (100), wobei
die Beurteilung durch das Beurteilungsmodul (400) weiterhin auf der empfangenen Geschwindigkeitsinformation beruht.

15. Elektronische Steuereinheit nach einem der Ansprüche 10 bis 14, wobei das Beurteilungsmodul (400) beurteilt, die Scheibenwischerdüse (340) in Betrieb zu nehmen, wenn der von der Abstandsinformation angegebene Abstand größer ist als ein vorbestimmter Abstand.

## Revendications

1. Procédé de commande d'une buse d'essuie-glace (340) d'un véhicule (100), réalisé par une unité de commande électronique (300) du véhicule (100), le procédé comprenant les étapes consistant à:
recevoir (S10; S110) une instruction pour actionner la buse d'essuie-glace (340);
recevoir une information de distance indiquant la distance entre ledit véhicule (100) et un véhicule suivant (110) derrière ledit véhicule (100), à partir d'un dispositif de capteur de distance (360) dont ledit véhicule (100) est équipé; et
évaluer (S20, S30, S40, S120, S130, S140), sur la base de ladite information de distance reçue, s'il faut actionner ou non la buse d'essuie-glace (340).

2. Procédé selon la revendication 1, comprenant en outre l'étape consistant à délivrer en sortie (S50; S180) une indication (200) au conducteur si ladite étape de jugement (S20, S30, S40; S120, S130, S140) conduit ou non à faire fonctionner la buse d'essuie-glace (340) sur la base de l'information de distance reçue.

3. Procédé selon la revendication 2, dans lequel ladite indication (200) indique une pluralité d'options sur la façon de procéder, et le procédé comprend en outre l'étape consistant à recevoir une sélection par le conducteur de l'une des options proposées.

4. Procédé selon la revendication 3, dans lequel lesdites options comprennent au moins une opération consistant à actionner la buse d'essuie-glace (340) avec un angle abaissé et/ou une pression d'eau réduite, retarder le fonctionnement de la buse d'essuie-glace jusqu'à ce qu'un jugement différent soit effectué dans une exécution répétée de ladite étape de jugement (S120, S130, S140), ou ne pas actionner la buse d'essuie-glace (340) du tout.

5. Procédé selon l'une quelconque des revendications 1 à 4,
comprenant en outre l'étape consistant à recevoir une information de vitesse indiquant la vitesse du véhicule (100) à partir d'un capteur de vitesse (350) dudit véhicule (100), dans lequel
ledit jugement dans ladite étape de jugement (S20, S30, S40; S120, S130, S140) est en outre fondé sur ladite information de vitesse reçue.

6. Procédé selon l'une quelconque des revendications 1 à 5, dans lequel on décide d'actionner la buse d'essuie-glace (340) si la distance indiquée par ladite information de distance est supérieure à une distance prédéterminée.

7. Procédé selon la revendication 6,
comprenant en outre l'étape consistant à recevoir une information de vitesse indiquant la vitesse du véhicule (100) à partir d'un capteur de vitesse (350) dudit véhicule (100),
dans lequel ladite distance prédéterminée dépend de la vitesse indiquée par ladite information de vitesse.

8. Procédé selon la revendication 7, dans lequel ladite distance prédéterminée est une valeur fixe (B), lorsque la vitesse indiquée par ladite information de vitesse est inférieure à une vitesse prédéterminée (A) et est proportionnelle à la vitesse lorsque la vitesse indiquée par ladite l'information de vitesse est supérieure à ladite vitesse prédéterminée (A).

9. Procédé selon l'une quelconque des revendications 1 ou 8, comprenant en outre l'étape consistant à
une information de distance côté de réception indiquant la distance entre ledit véhicule (100) et un autre objet situé latéralement dudit véhicule à partir d'au moins un dispositif de capteur de distance latéral dont lequel ledit véhicule est équipé, dans lequel
ledit jugement est en outre fondé sur ladite information de distance latérale.

10. Unité de commande électronique pour un véhicule (100) permettant de commander une buse d'essuie-glace (340) du véhicule (100), ladite unité de commande électronique comprenant
un premier module de réception (410) pour recevoir une instruction pour actionner la buse d'essuie-glace (340);
**caractérisé en ce qu'**il comprend en outre un deuxième module de réception (420) pour recevoir une information de distance indiquant la distance entre ledit véhicule (100) et un véhicule suivant (110) derrière ledit véhicule (100), à partir d'un dispositif de capteur de distance (360) dont ledit véhicule (100) est équipé; et
un module de jugement (400) pour juger, sur la base de ladite information de distance reçue, s'il faut actionner ou non la buse d'essuie-glace (340).

11. Unité de commande électronique selon la revendication 10, comprenant en outre un module de sortie (450) permettant de délivrer en sortie une indication (200) au conducteur si ledit module de jugement (400) décide de ne pas actionner la buse d'essuie-glace (340) sur la base de la information de distance reçue.

12. Unité de commande électronique selon la revendication 11, dans lequel ladite indication (200) indique une pluralité d'options sur la façon de procéder, et le premier module de réception est en outre conçu pour recevoir une sélection par le conducteur de l'une des options proposées.

13. Unité de commande électronique selon la revendication 12, dans laquelle
lesdites options comprennent l'actionnement de la buse d'essuie-glace (340) avec un angle abaissé et/ou une pression d'eau réduite, l'unité de commande électronique comprenant en outre
un module d'instruction (440) pour ordonner à la buse d'essuie-glace (340) de fonctionner avec un angle abaissé et une pression d'eau réduite, si ladite option est sélectionnée par le conducteur.

14. Unité de commande électronique selon l'une quelconque des revendications 10 à 13,
comprenant en outre un troisième module de réception (430) permettant de recevoir une information de vitesse indiquant la vitesse du véhicule (100) à partir d'un capteur de vitesse (350) dudit véhicule (100), dans lequel
ledit jugement effectué par ledit module de jugement (400) est en outre fondé sur ladite information de vitesse reçue.

15. Unité de commande électronique selon l'une quelconque des revendications 10 à 14, dans laquelle ledit module de jugement (400) juge d'actionner la buse d'essuie-glace (340) si la distance indiquée par ladite information de distance est supérieure à une distance prédéterminée.
